# EUROPEAN PATENT SPECIFICATION

(11) **EP 3 548 438 B1**
(45) Date of publication and mention of the grant of the patent: **22.12.2021**
(21) Application number: 17822020.8
(22) Date of filing: 29.11.2017
(51) Int. Cl.: C02F 1/00, C02F 1/04, G01N 21/3577, C02F 5/08, G01N 21/35, C02F 1/06, C02F 1/44, C02F 103/08, C02F 103/06, C02F 103/36, C02F 5/10, C02F 5/14, G01N 21/84, G01N 21/359

(54) **METHOD FOR MEASURING THE CONCENTRATION OF AN ANTI- FOULING ADDITIVE IN A FLOW OF SALINE WATER CIRCULATING IN A DESALINATION PLANT AND APPLICATIONS THEREOF**
VERFAHREN ZUR MESSUNG DER KONZENTRATION EINES ANTI-FOULING-ADDITIVS IN EINEM IN EINER ENTSALZUNGSANLAGE ZIRKULIERENDEN SALZWASSERSTROM UND ANWENDUNGEN DAVON
PROCÉDÉ PERMETTANT DE MESURER LA CONCENTRATION D'UN ADDITIF ANTISALISSURE DANS UN FLUX D'EAU SALÉE CIRCULANT DANS UNE INSTALLATION DE DESSALEMENT ET APPLICATIONS ASSOCIÉES

(30) Priority: 01.12.2016 IT 201600122231
(43) Date of publication of application: 09.10.2019
(73) Proprietor: LW S.r.l., 62010 Montecassiano (MC) (IT)
(72) Inventor: CESARI, Massimiliano, 62010 Montecassiano (MC) (IT)
(74) Representative: Marturano, Pasqualino
(86) International application number: PCT/IB2017/057493
(87) International publication number: WO 2018/100505

(56) References cited:
- EP-A1- 0 614 085
- WO-A1-2009/132727
- WO-A1-2009/132727
- TW-B- I 527 771
- TW-B- I 527 771
- US-A- 5 242 602

## Description

### METHOD FOR MEASURING THE CONCENTRATION OF AN ANTI-FOULING ADDITIVE IN A FLOW OF SALINE WATER CIRCULATING IN A DESALINATION PLANT AND APPLICATIONS THEREOF

The present invention relates to a method for measuring the concentration of an anti-fouling additive in a flow of saline water circulating in a desalination plant and the relative applications.

In particular, the present invention also relates to a method for preventing or controlling the fouling of a desalination plant in which a flow of saline water circulates, based on the above-mentioned method for measuring the concentration of an anti-fouling additive.

In an embodiment not forming part of the invention, the present disclosure also relates to a desalination plant of a flow of saline water wherein the above-mentioned method for measuring an anti-fouling additive and the above-mentioned method for the prevention and control of fouling, are applied.

As is known, in the state of the art, water containing dissolved salts (for example, seawater, formation water produced in oil fields, etc.) can be treated in desalination plants to separate the dissolved salts and recover water with a lower saline content (desalinated water). Depending on the content of residual salts, the desalinated water can be adopted for various uses, for example, for food use (drinking water), for agricultural use (for example as irrigation water) or for industrial uses (for example as cooling water).

In the state of the art, the desalination of saline water is effected using various known techniques, such as distillation, membrane permeation and ion exchange. In the case of desalination of seawater, the most widely-used desalination techniques are based on distillation (for example *Multistage Flash Distillation - MSF*) or *Multiple-Effect Distillation* - *MED*) and on membrane permeation (e.g. inverse osmosis or electrodialysis).

In a desalination plant, the flow of saline water at the inlet (*feed water*) is typically treated in at least one desalination unit with the production, at the outlet, of a stream of desalinated water (also called distillate) and a reject flow consisting of a brine.

In distillation processes, desalinated water is obtained by evaporating the water of the stream of saline water and, subsequently, collecting and condensing the vapour.

In membrane permeation processes, desalinated water is obtained by causing the ion species dissolved in saline water to selectively migrate through semipermeable membranes, i.e. membranes that the solvent cannot pass through.

In general, equipment that comes into direct contact with the stream of water circulating in the desalination plant is subject to fouling phenomena. The fouling is mainly due to the precipitation of salts present in the water and their consequent deposition on the surface of the equipment where encrustations are formed. The encrustations mainly consist of calcium carbonate, calcium sulfates, silica, metal silicates, metal oxides and hydroxides such as aluminium, iron and manganese.

The fouling of equipment can also be caused by the deposition of substances present in saline water in a colloidal form (clay, lime, mud, organic colloids, etc.) and also by the depositing of microorganisms (*biofouling*)*.*

The fouling phenomena described above can cause various drawbacks in the management of the desalination plant. The fouling of the surfaces of heat exchangers (evaporators and condensers) or membranes, for example, significantly reduces the efficiency of the desalination system, increasing the energy consumption. Fouling of the equipment also causes frequent interruptions in the desalination process, a progressive reduction in the quality of the desalinated water produced and also accelerated wear of the equipment.

In order to prevent or control fouling of the desalination plant, the addition of one or more antidesalination plant, the addition fouling additives to the saline water to be treated, is known. The anti-fouling additives can have various functions, among which: preventing the deposition of salts dissolved in saline water and therefore the formation of encrustations; controlling and/or inhibiting the growth of microorganisms; maintaining the colloidal material in suspension in order to avoid sedimentation.

Examples of anti-fouling additives commonly used in desalination plants, in particular for controlling the formation of deposits of an inorganic origin, comprise the following compounds: polyphosphates, phosphonates and polymeric compounds (e.g. poly(meth)acrylates and polyacrylamides).

The anti-fouling additives can be dosed in the saline water in extremely variable quantities. The dosage generally depends on the characteristics of the additive, the characteristics of the saline water to be treated (for example, concentration of salts, temperature, etc.) the desalination system, its specific operating conditions (e.g. concentration

The considerable effectiveness of the anti-fouling additives currently available, however, allows these additives to be dosed even at relatively low concentrations, forexample within the range of 1-20 ppm.

During the desalination process, the anti-fouling additives accumulate, together with the salts of the saline water, in the flow of brine leaving the desalination plant.

Furthermore, during the desalination process, the concentration of additives in the water can also diminish due to various factors, such as malfunctioning in the dosage system of the same and/or errors in the pre-dilution process of the additive before being added to the saline water to be treated.

The effectiveness of the prevention and control action of the fouling of a desalination system strictly depends on the concentration of anti-fouling additives in the saline water and on keeping this concentration within a pre-established range, the other operating conditions being equal. Consequently, during the running of the plant, the concentration of the additives present in the saline water treated must be periodically determined so as to be able to vary the dosage, which is normally effected in a continuous mode, reducing or increasing the quantity of additive dosed.

It is therefore evident that an effective functioning of a desalination plant strictly depends on the possibility of measuring the concentration of additives in the saline water circulating in the plant, precisely, accurately and rapidly.

In the state of the art, the measurement of the concentration of anti-fouling additives in the flow of saline water is effected in off-line mode, i.e. taking a sample of the water containing the additive and determining its concentration in the laboratory with appropriate analytical techniques.

US 2009/0065433A1, WO 90/04159A1 and US 4514504 describe quantitative determinations, effected off-line, of anti-fouling additives based on polyacrylic acid. The analysis methods described generally comprise the following steps: treatment of the sample in order to separate or eliminate the interfering ionic species; immobilization of the polyacrylic species to be quantified on an adsorbent support; elution of the polyacrylic species to form a solution containing said species to be subjected to quantitative analysis; quantitative analysis of the polyacrylic species by means of analytical techniques, such as calorimetry, complexometric titration, turbidimetry, etc..

The determination of the concentration of the additives by means of off-line measurements has various disadvantages.

Off-line measurements generally require relatively lengthy implementation times, thus influencing the rapidity with which it is possible to intervene for regulating the operating conditions of the desalination plant.

Furthermore, the analytical techniques used in the state of the art for determining the concentration of anti-fouling agents typically have a relatively low sensitivity. The results are therefore not very precise and accurate, above all in cases in which the additives are present in the saline water in low concentrations (e.g. 1-5 ppm). In order to overcome this drawback, it is customary in the state of the art to determine the concentration of the additive in a sample of water taken from the flow of brine, where the additive is present in a higher concentration with respect to the saline water at the inlet.

The management of the operating conditions of the plant, however, in particular the management of the dosage of anti-fouling additives, on the basis of the concentration values of the additives determined on the brine (rather than on the saline water at the inlet) is rather complex. In the face of a certain initial dosage in the saline water at the inlet, in fact, the concentration of additives in the brine can vary considerably in relation to the characteristics of the desalination plant.

Off-line measurements also often require laborious preparation operations of the sample to be analyzed, for example to eliminate substances that can interfere with the determination of the concentration. These pre-treatment operations - e.g. pH modifications, thermal treatment, etc. - however, can also cause alterations in the sample to be analyzed with negative consequences on the accuracy and precision of the measurement. In some cases, for example, the anti-fouling additives have a low thermal stability and can therefore decompose if treated thermally at relatively high temperatures.

Considering the above state of the art, the Applicant has set the primary objective of providing a method for measuring the concentration of an anti-fouling additive in a flow of saline water circulating in a desalination plant, which at least partly allows to overcome the drawbacks of current measurement methods.

Within this aim, a first objective of the present invention is to provide a method for measuring the concentration of an anti-fouling additive in a flow of saline water circulating in a desalination plant, which allows said concentration to be determined rapidly and possibly with greater precision and accuracy with respect to the known methods.

A second objective is to provide a method for measuring the concentration of an anti-fouling additive in a flow of saline water circulating in a desalination plant, which can also be applied on-line, i.e. by effecting the measurement directly on a portion of the flow of saline water circulating in the plant, without requiring the collection of a sample and transferring it to a test site (e.g. a laboratory).

A third objective is to provide a method for measuring the concentration of an anti-fouling additive in a flow of saline water circulating in a desalination plant, which allows a rapid intervention on the desalination plant in order to adjust, if necessary, the concentration of the anti-fouling additives or vary other operating conditions so as to run the plant under optimal conditions as constant as possible over time.

A further objective is to provide a method for preventing or controlling the fouling of a desalination plant of a flow of saline water, which allows to reduce interruptions of the desalination process to enable maintenance interventions of the equipment and/or delay wear of the plant.

In an embodiment not forming part of the present invention, another objective of the disclosure is to provide a desalination plant of a flow of saline water wherein the above methods for measuring the concentration of anti-fouling additives and preventing and/or controlling fouling, are applied.

The Applicant has now found that these and other objectives, which will appear more evident from the following description, can be achieved by using near infrared spectroscopy (NIR spectroscopy) as analytical technique for determining the concentration of anti-fouling additives in a flow of saline water circulating in a desalination plant.

The Applicant has in fact observed that NIR spectroscopy allows the concentration of anti-fouling additives in a flow of saline water circulating in a desalination plant to be determined rapidly and with a high precision and accuracy. The use of NIR spectroscopy also offers the advantage of allowing the on-line monitoring of the concentration of the additives and automation of the dosing operations of the additives or the adjustment of the other operating parameters (e.g. temperature, pressure, etc.), as will be explained in greater detail hereunder.

EP 0614085 A1, US 5242602 A and TW I527771 B disclose methods for determining the amount of anti-fouling additives (e.g. polymeric dispersant) dosed to treat water in steam generating systems or reverse osmosis units by means of on-line near infrared spectrometry (NIR).

According to a first aspect, the present invention therefore relates to a method for measuring the concentration of an anti-fouling additive in a flow of saline water circulating in a desalination plant according to the method of claim 1.

According to a second aspect, the present invention relates to a method for preventing or controlling the fouling of a saline water desalination plant which comprises the steps of:
(a) dosing a quantity of at least one anti-fouling additive in a flow of saline water circulating in a desalination plant;
(b) periodically, determining a concentration value C₁ of said anti-fouling additive in said saline water in accordance with the method of claim 1;
(c) varying the dosage of said at least one anti-fouling additive according to step (a) so as to keep the concentration value C₁ within a predetermined range.

According to a third aspect, in an embodiment not forming part of the invention, the present disclosure also relates to a desalination plant comprising:
- at least one desalination unit for treating at least one flow of saline water comprising at least one anti-fouling additive and producing at least one flow of desalinated water and one flow of brine;
- at least one device, connected to said desalination unit, for acquiring NIR spectra of at least one of said saline water or brine flows and calculating a concentration value of said additive.

The present invention is based on the observation that, by means of NIR spectroscopy analysis, the concentration of the most common anti-fouling additives used in desalination plants can be determined on saline aqueous matrixes with adequate precision and accuracy, even when the additives are present in relatively low concentrations (e.g. 1-5 ppm).

The Applicant has also found that the quantitative analysis of anti-fouling additives by means of NIR spectroscopy, can be effected directly on the water circulating in the desalination system, without requiring the collection of samples to be subjected to pre-treatment before analysis. The measurement method according to the present invention is therefore suitable for being used for the on-line monitoring of the concentration of anti-fouling additives.

A particular advantage offered by the measurement method according to the present invention lies in the fact that the devices for acquiring and processing the NIR spectra can be easily interfaced with other devices so as to automatically control the functioning of the latter on the basis of the concentration values of the additives measured. In particular, the devices for acquiring and processing the NIR spectra can be connected, for example by means of programmable logic units, to the dosing devices of the additives to control the dosage of the same. The present invention therefore allows rapid interventions on the desalination plant for optimizing its operating conditions.

A further advantage of the present invention lies in the fact that the quantitative determination of the additives by means of NIR spectroscopy can be effected using calibration curves obtained through univariate regression methods or, more preferably, multivariate regression chemometric methods. By applying these methods to sets of concentration values of an additive determined by measurements on samples of saline water with a known concentration of said additive, calibration curves (or models) can be obtained that correlate the concentration of the additive with the specific characteristics of the desalination plant, the specific additives used in the system and, in general, the plant and operating vriablesriables that can affect the determination of the concentration value.

The measurement method according to the present invention can be used for monitoring in continuous, but also discontinuous, mode, the concentration of one or more anti-foulincf additives dosed in a flow of saline water circulating in a desalination plant.

For the purposes of the present invention, the expression "saline water" indicates water containing dissolved salts. The saline water sent to the desalination plant is preferably water having a total content of dissolved solids (TDS - determinable with the standard method ASTM D5907-13) equal to or higher than 500 ppm (0.05% by weight with respect to the total weight of the saline water). The TDS content is preferably equal to or lower than 250,000 ppm.

The present invention can be applied to various types of desalination plants, such as distillation plants and membrane permeation plants. The desalination plant is preferably a distillation plant, in particular a multistep distillation plant or a multiple-effect distillation plant.

The desalination plant preferably has a concentration number (i.e. the ratio between the volume of saline water at the inlet and the volume of brine at the outlet) within the range of 1.0 - 1.9.

The present invention can be used for determining the concentration of various types of anti-fouling additives. The anti-fouling additives are preferably selected from: polycarboxylate compounds, in particular polyacrylates; polyphosphates; phosphonic acids and their salts; phosphino-carboxylic acids and their salts, polysaccharides, in particular carboxymethyl inulin.

The anti-fouling additives are more preferably polyacrylates. For the purposes of the present invention, the term "polyacrylates" refers to polyacrylic acid, polymethacrylic acid, polymaleic acid and copolymers composed of at least 50% by weight of acrylic acid, methacrylic acid or maleic acid and up to 50% by weight of one or more copolymerizable monomers. Examples of comonomers comprise acrylamide, alkyl acrylates, alkyl methacrylates, hydroxyalkyl acrylates and hydroxyalkyl methacrylates, and the like, wherein said alkyl groups contain from 1 to 4 carbon atoms. The polyacrylates can have a molecular weight, for example, within the range of 1,000 - 6,000.

Each anti-fouling additive is preferably present in the saline water in a concentration within the range of 0.5 - 100 ppm, preferably 1 - 50 ppm, even more preferably within the range of 1 - 10 ppm.

In order to determine the concentration of an anti-fouling additive present in a flow of saline water according to the present invention, a calibration curve is required, which is capable of correlating NIR spectra of a sample of saline water containing said anti-fouling additive with the concentration values of said additive in the saline water.

The calibration curve can be prepared with methods known to the person skilled in the art. The calibration curve is preferably obtained by means of univariate regression methods or, more preferably, multivariate regression chemometric methods (calibration model).

In order to obtain the calibration curve, for example, a set of samples can be prepared (indicated hereunder as "set of calibration samples"), each consisting of saline water (matrix) containing a known quantity by weight of the anti-fouling additive whose concentration is to be determined.

The saline water used as matrix is preferably the same saline water subjected to treatment in the desalination plant.

In general, the greater the number of samples used for preparing the calibration curve is, the more accurate the determination of the concentration of the additive in the saline water, is.

The number of samples is generally selected in relation to the number of variables that can influence the concentration of the specific additive to be monitored.

The number of samples used for defining the calibration curve is preferably equal to at least 5, more preferably at least 10. In a particularly preferred embodiment, the number of samples ranges from 10 to 50.

The number of samples of the calibration set, for example, can be determined by subdividing the range of concentration values in which the additive is to be dosed, into at least 5, preferably 7, sub-ranges, so as to have 5, preferably 7, "concentration levels" for the calibration. Three distinct calibration samples are then prepared for each concentration "level".

In order to obtain the calibration curve, a plurality of NIR spectra is acquired on each of the calibration samples.

The NIR spectra of each sample for the calibration are subsequently correlated with the corresponding concentration values determinated on the basis of the quantity by weight of additive and volume of saline water (matrix) used for the preparation of each sample.

The NIR spectra, both for the purpose of obtaining the calibration curve (calibration spectra) and for the purpose of measuring the concentration (measurement spectra), are preferably acquired within the range of wave numbers of 4, 000- 12, 500 cm⁻¹.

The NIR spectra can be acquired in both reflectance mode and in transmittance mode. The spectra are preferably acquired in reflectance mode.

Once acquired, the calibration and measurement spectra can be pre-processed with methods known in the art for correcting any spectral distorsions due, for example, to shifts in the baseline.

The calibration spectra and reference values of the concentration of the additive are analyzed with known statistical-mathematical methods of univariate and/or multivariate linear regression in order to determine a mathematical correlation (calibration curve or model) between the spectroscopic characteristics of the NIR spectra and the concentration values of the additive.

The multivariate linear regression method is preferably selected from: multiple least squares method, partial least squares method, principal components method and combinations thereof.

The calibration curve is preferably subjected to validation using a set of control samples prepared in the same way as the samples used for producing the calibration curve, but having different concentration values with respect to the latter.

The calibration curve can be used for calculating the concentration of the additive, by applying it for example to a NIR spectrum acquired on-line on a flow of saline water tapped from the flow of water circulating in the desalination plant and transferred to the NIR spectrophotometer, for example by means of a transfer conduit. For the puposes of the present invention, above-mentioned tapped flow is also called sampling flow.

In a first preferred embodiment of the present invention, the acquisition of the NIR spectra is advantageously effected on a sampling flow taken from said flow of saline water at the inlet, i.e. after dosing the additive and before the desalination treatment. As already indicated, the possibility of determining the concentration of the additive upstream of the desalination treatment, rather than downstream, (i.e. in the brine) facilitates the plant management, allowing more accurate interventions for adjusting the operating conditions, and in particular the dosage of the additives.

In a second preferred embodiment of the present invention, the acquisition of the NIR spectra is effected on a sampling flow taken from the flow of brine at the outlet, i.e. after treatment of the saline water containing the additive. The present invention is therefore advantageously able to overcome the difficulties of managing the desalination plant resulting from the use of concentration data of the additive determined on the brine flow with the known analysis techniques.

The use of NIR spectroscopy combined with chemometric calibration models, in fact, allows sufficiently precise and accurate quantitative determinations of the additives to be effected on the brine, as the calibration model adequately takes proper account of the plant variables and plant operating conditions.

The Applicant has also surprisingly observed that when the quantitative analysis of the anti-fouling additive is effected on saline water at the inlet of the plant, the stability of the instrumental signal can be improved, and consequently also the reproducibility of the concentration measurements, by increasing the ionic strength of the solution subjected to analysis.

Without referring to any specific theory, it is assumed that an increase in the ionic strength favours the dispersion of the anti-fouling additives in the saline water with consequent benefits in terms of stability of the absorption signal of the NIR radiations recorded by the spectrophotometer.

In order to increase the ionic strength, at least one salt is added to the sampling flow, comprising:
- at least one anion selected from: chlorides, chlorates, perchlorates and nitrates;
- at least one monovalent or bivalent cation preferably selected from alkaline and alkaline-earth metals.

A mixture of salts containing two or more of the above-mentioned anions is preferably used.

The dosage of the above-mentioned at least one salt for varying the ionic strength of the sampling flow depends on the specific characteristics of the sampling flow as well as on the characteristics of the desalination system and relative operating modes.

The total quantity of salt added to the sampling flow is preferably within the range of 0.01% - 20.0% by weight with respect to the weight of the sampling flow. As a result of this addition, the ionic strength of the sampling flow can be increased to values higher than 60% with respect to the initial ionic strength value.

The salt is preferably also added to the samples of saline water containing the anti-fouling additive. The salt is preferably added to the calibration samples in the same concentrations used in the sampling flow.

In particular, it has been observed that the increase in the ionic strength of the sample to be analyzed provides the best results in terms of reproducibility of the measurement in the case of anti-fouling additives based on polyacrylates.

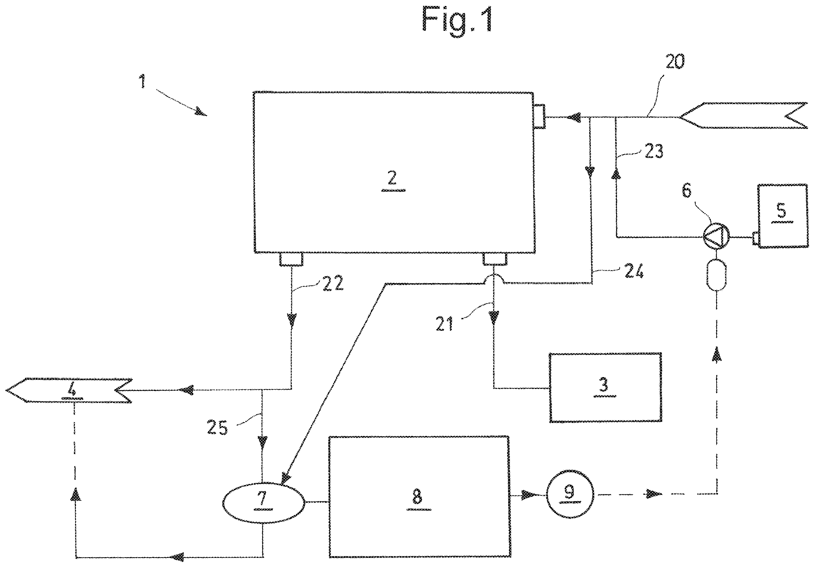

Further features of the invention will appear more evident from the following detailed description, referring to one of its embodiments, which is purely illustrative and non-limiting, illustrated in the attached drawings, in which Figure 1 is a block diagram of a desalination plant for the treatment of saline water according to the invention.

With reference to the attached Figure 1, a desalination system of saline water according to a disclosure not being part of the present invention is described, indicated as a whole with the reference number (1).

With reference to Figure 1, the plant (1) comprises a generic desalination unit (2). The desalination unit (2) comprises:
- an inlet pipe (20) into which a flow of saline water is fed;
- a first outlet pipe (21) from which a flow of desalinated water exits, having a lower salinity with respect to the saline water at the inlet;
- a second outlet pipe (22) from which a flow of brine exits, as waste product, having a greater salinity with respect to the saline water at the inlet.

The desalinated water (21) is sent to a user (3), whereas the brine (22) is sent to a drain (4).

The plant (1) comprises a group of tanks (5) comprising at least one tank containing an anti-fouling additive, to prevent the fouling of the desalination plant in which the saline water is circulating. Four tanks can be provided, for example, with four different types of additives, such as, for example: anti-encrustation agent, anti-foam agent, corrosion inhibitor, anti-oxygenating agent (for example, in the case of a MSF desalination plant, with a scrubber tower suitable for removing the oxygen from the saline water).

The group of tanks (5) is connected to a dosing device (6) or to a dosing device (e.g. a pump) for each type of additive to be fed into the inlet pipe (20), by means of a feed pipe (23) connected to the inlet pipe (20). In this way, the saline water circulating in the desalination plant comprises the anti-fouling additives necessary for keeping the desalination plant clean.

Brine is tapped from the outgoing flow of brine (22) , or from the flow of saline water at the inlet (20), through a first tapping conduit (25) or saline water is tapped through a second tapping conduit (24). A stream of brine or saline water flows, for example continuously, in the tapping conduit (24, 25), each containing the dosed additives, towards the drain (4). The stream, flowing in the tapping conduit (24, 25) is also called sampling flow.

The method for determining the concentration according to the present invention is an on-line method and the sampling flow is fed through the tapping conduit (24, 25) to a NIR spectrophotometer (7) suitably calibrated for determining the concentration of one or more of the additives present.

The processing of the NIR spectra acquired, for example using an electronic processor (8), provides a concentration value of the additive in the flow of water analyzed on the basis of which possible adjustments of the operating conditions of the desalination system can be made.

If, for example, the concentration of the additive is outside the predetermined range of values, for example, below the minimum value of said range, the dosage of the additive can be varied, by increasing the dose of additive fed. If, viceversa, the concentration of the additive is above the maximum value of said range, the dosage of the additive can be varied, by decreasing the dose of additive fed.

The adjustment of the operating conditions of the desalination plant can be advantageously effected in an automated way. For this purpose, for example, a programmable logic unit of the PLC type (9) is connected to the NIR spectrophotometer (7) and/or to the electronic processor (8) to receive the results of the concentration measurement of the additives contained in the sampling flow. The unit (9) is connected to the dosing device (6) to control the feeding of the additives, so that their content in the saline water circulating in the desalination plant is kept within a predetermined range (e.g. 2-4 ppm).

The desalination unit (2) of figure 1 is, for example, a unit in which the saline water is desalinated by means of distillation or membrane permeation processes.

The above description of an embodiment applying the innovative principles of the present invention is naturally provided by way of example of said innovative principles and should therefore not be considered as limiting the protection scope of the patent claimed herein, and the scope of protection is defined in the appended claims.

### EXAMPLE

The method for measuring anti-fouling additives according to the present invention was used on a MED desalination plant having a capacity of 4,000 tons/day of distillate (concentration number equal to 1.40).

The water at the inlet had a salinity (TDS) equal to about 35,000 ppm.

An anti-encrustation additive based on polyacrylates was dosed in the saline water, before entering the desalination plant, in a quantity equal to 3.0 ppm.

7 calibration samples with a known content of additive in saline water (the same water fed to the plant) were prepared for constructing the chemometric calibration model.

The concentrations of the calibration samples were: 2.8, 3.0, 3.2, 3.4, 3.6, 3.8 and 4.0 ppm. Three different calibration samples were prepared for each concentration value.

The NIR spectra were collected in reflectance mode, using an instrument equipped with a tungsten halogen lamp and an InGaAs detector. The signals were recorded between 10,000 and 4,000 cm⁻¹, collecting 82 scans at a nominal resolution of 4 cm⁻¹.

The quantitative calibration curve was obtained by processing the data collected with a multivariate linear regression method.

The calibration curve was subsequently validated using a further set of validation samples, each composed of a solution of saline water containing the additive in a known concentration.

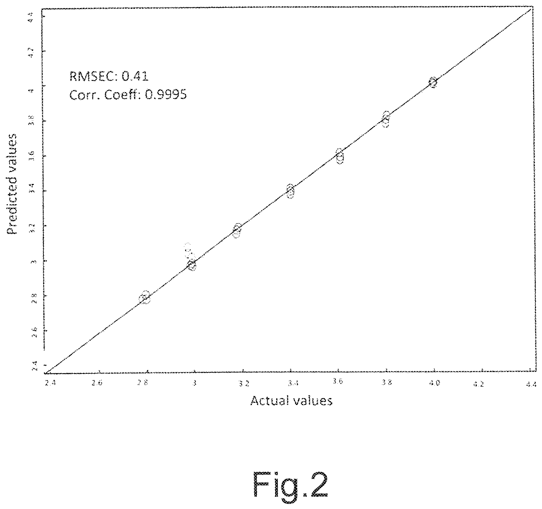

Figure 2 shows the graph relating to the calibration model obtained. The calibration model has a standard calibration error (RMSEC) equal to 0.41 and a correlation coefficient (R) equal to 0.9995. The calibration model therefore allows a precise and accurate analysis of the anti-fouling additive.

## Claims

1. Method for measuring the concentration of an anti-fouling additive in a flow of saline water circulating in a desalination plant comprising the steps of:
(a) supplying a flow of saline water comprising at least one anti-fouling additive to a desalination plant to produce at least one flow of brine and one flow of desalinated water;
(b) acquiring at least one NIR spectrum (near infrared) of one of said flows of saline water and brine;
(c) calculating a concentration value of said anti-fouling additive by means of a calibration curve that correlates the NIR spectrum with concentration values of said additive;
wherein the measurement of the concentration of said anti-fouling additive is carried out in an on-line mode, by withdrawing at least one first sampling flow from said flow of saline water and acquiring said at least one NIR spectrum on said first sampling flow to which at least one salt has been added comprising:
- at least one anion selected from: chlorides, chlorates, perchlorates and nitrates;
- at least one monovalent or divalent cation, preferably selected from alkali and alkaline earth metals.

2. Method according to the preceding claim, wherein said at least one salt is added to said sampling flow in an amount in the range 0.01 - 20.0 % by weight with respect to the weight of said flow.

3. Method according to any one of the preceding claims, wherein said anti-fouling additive is selected from: polycarboxylate compounds, in particular polyacrylates; polyphosphates; phosphonic acids and their salts; phosphino-carboxylic acids and their salts, polysaccharides, in particular carboxymethyl inulin; or mixtures thereof.

4. Method according to any one of the preceding claims, wherein said calibration curve is obtained by correlating a plurality of NIR spectra with a corresponding plurality of concentration values of said anti-fouling additive by an univariate and/or multivariate linear regression method.

5. Method according to one of the preceding claims, wherein a multivariate linear regression method is used selected from: multiple least squares method, partial least squares method, principal components method and combinations thereof.

6. Method for preventing or controlling the fouling of a saline water desalination plant which comprises the steps of:
(a) dosing an amount of at least one anti-fouling additive in a flow of saline water circulating in a desalination plant;
(b) periodically, determining a concentration value C₁ of said anti-fouling additive in said saline water in accordance with the method according to one or more of the preceding claims;
(c) varying the dosage of said at least one anti-fouling additive according to step (a) so as to keep the concentration value C₁ within a predetermined range.

## Patentansprüche

1. Verfahren zur Messung der Konzentration eines Antifouling-Additivs in einem in einer Entsalzungsanlage zirkulierenden Salzwasserstrom, umfassend die Schritte:
(a) Zuführen eines Salzwasserstroms, umfassend mindestens ein Antifouling-Additiv zu einer Entsalzungsanlage, um mindestens einen Salzlakestrom und einen Strom von entsalztem Wasser zu erzeugen;
(b) Erfassen mindestens eines NIR-Spektrums (Nahinfrarot) eines der Ströme von Salzwasser und Salzlake;
(c) Berechnen eines Konzentrationswertes des Antifouling-Additivs anhand einer Kalibrierungskurve, die das NIR-Spektrum mit den Konzentrationswerten des Additivs korreliert;
wobei die Messung der Konzentration des Antifouling-Additivs in einem Online-Modus durchgeführt wird, indem mindestens ein erster Probenahmestrom aus dem Salzwasserstrom entnommen wird und das mindestens eine NIR-Spektrum an dem ersten Probenahmestrom, dem mindestens ein Salz zugesetzt wurde, erfasst wird, umfassend:
- mindestens ein Anion, ausgewählt aus: Chloriden, Chloraten, Perchloraten und Nitraten;
- mindestens ein einwertiges oder zweiwertiges Kation, vorzugsweise ausgewählt aus Alkali- und Erdalkalimetallen.

2. Verfahren nach dem vorstehenden Anspruch, wobei das mindestens eine Salz dem Probenahmestrom in einer Menge im Bereich von 0,01 bis 20,0 Gew.-%, bezogen auf das Gewicht des Stroms, zugesetzt wird.

3. Verfahren nach einem der vorstehenden Ansprüche, wobei das Antifouling-Additiv ausgewählt ist aus: Polycarboxylatverbindungen, insbesondere Polyacrylaten; Polyphosphaten; Phosphonsäuren und deren Salzen; Phosphincarbonsäuren und deren Salzen, Polysacchariden, insbesondere Carboxymethylinulin; oder Mischungen davon.

4. Verfahren nach einem der vorstehenden Ansprüche, wobei die Kalibrierungskurve durch Korrelieren einer Vielzahl von NIR-Spektren mit einer entsprechenden Vielzahl von Konzentrationswerten des Antifouling-Additivs durch ein univariates und/oder multivariates lineares Regressionsverfahren erhalten wird.

5. Verfahren nach einem der vorstehenden Ansprüche, wobei ein multivariates lineares Regressionsverfahren verwendet wird, das ausgewählt ist aus: dem Verfahren der multiplen kleinsten Quadrate, dem Verfahren der partiellen kleinsten Quadrate, dem Hauptkomponentenverfahren und Kombinationen davon.

6. Verfahren zur Verhinderung oder Kontrolle der Verschmutzung einer Salzwasser-Entsalzungsanlage, das die Schritte umfasst:
(a) Dosieren einer Menge mindestens eines Antifouling-Additivs in einen in einer Entsalzungsanlage zirkulierenden Salzwasserstrom;
(b) periodisches Bestimmen eines Konzentrationswertes C₁ des Antifouling-Additivs in dem Salzwasser gemäß dem Verfahren nach einem oder mehreren der vorstehenden Ansprüche;
(c) Variieren der Dosierung des mindestens einen Antifouling-Additivs gemäß Schritt (a), um den Konzentrationswert C₁ innerhalb eines vorgegebenen Bereichs zu halten.

## Revendications

1. Procédé pour la mesure de la concentration d'un additif anti-colmatage dans un courant d'eau salée circulant dans une installation de dessalement comprenant les étapes suivantes :
(a) alimenter, avec un courant d'eau salée comprenant au moins un additif anti-colmatage, une installation de dessalement pour produire au moins un courant de saumure et un courant d'eau dessalée ;
(b) acquérir au moins un spectre NIR (proche infrarouge) de l'un desdits courants d'eau salée et de saumure ;
(c) calculer une valeur de concentration dudit additif anti-colmatage au moyen d'une courbe d'étalonnage qui met en corrélation le spectre NIR avec des valeurs de concentration dudit additif ;
dans lequel la mesure de la concentration dudit additif anti-colmatage est effectuée dans un mode en ligne, par le prélèvement d'au moins un premier courant d'échantillonnage à partir dudit courant d'eau salée et l'acquisition dudit au moins un spectre NIR sur ledit premier courant d'échantillonnage auquel au moins un sel a été ajouté comprenant :
- au moins un anion sélectionné parmi : les chlorures, les chlorates, les perchlorates et les nitrates ;
- au moins un cation monovalent ou bivalent, de préférence sélectionné parmi les métaux alcalins et alcalino-terreux.

2. Procédé selon la revendication précédente, dans lequel ledit au moins un sel est ajouté audit courant d'échantillonnage dans une quantité dans la plage de 0,01 à 20,0 % en poids par rapport au poids dudit courant.

3. Procédé selon l'une quelconque des revendications précédentes, dans lequel ledit additif anti-colmatage est sélectionné parmi : les composés de polycarboxylate, en particulier les polyacrylates ; les polyphosphates ; les acides phosphoniques et leurs sels ; les acides phosphino-carboxyliques et leurs sels, les polysaccharides, en particulier l'inuline carboxyméthylique ; ou leurs mélanges.

4. Procédé selon l'une quelconque des revendications précédentes, dans lequel ladite courbe d'étalonnage est obtenue par la mise en corrélation d'une pluralité de spectres NIR avec une pluralité correspondante de valeurs de concentration dudit additif anti-colmatage par une méthode de régression linéaire à une seule variable et/ou à variables multiples.

5. Procédé selon l'une des revendications précédentes, dans lequel une méthode de régression linéaire à variables multiples est utilisée, sélectionnée parmi: une méthode des moindres carrés multiples, une méthode des moindres carrés partiels, une méthode des composantes principales et leurs combinaisons.

6. Procédé pour la prévention ou la limitation du colmatage d'une installation de dessalement d'eau salée qui comprend les étapes suivantes :
(a) doser une quantité d'au moins un additif anti-colmatage dans un courant d'eau salée circulant dans une installation de dessalement ;
(b) périodiquement, déterminer une valeur de concentration C₁ dudit additif anti-colmatage dans ladite eau salée conformément au procédé selon l'une ou plusieurs des revendications précédentes ;
(c) faire varier le dosage dudit au moins un additif anti-colmatage selon l'étape (a) de façon à maintenir la valeur de concentration C₁ au sein d'une plage prédéterminée.
